# EUROPEAN PATENT APPLICATION

(11) **EP 4 120 398 A1**
(43) Date of publication of application: **18.01.2023**
(21) Application number: 21767064.5
(22) Date of filing: 18.01.2021
(51) Int. Cl.: H01M 4/58, H01M 4/62, H01M 10/0525

(54) **LITHIUM SUPPLEMENTAL MATERIAL, PREPARATION METHOD THEREFOR AND USE THEREOF**

(30) Priority: 10.03.2020 CN 202010159571
(71) Applicant: Institute of Physics, Chinese Academy of Sciences, Beijing 100190 (CN)
(72) Inventor: TIAN, Mengyu, Beijing 100190 (CN); QI, Wenbin, Beijing 100190 (CN); YU, Hailong, Beijing 100190 (CN); HUANG, Xuejie, Beijing 100190 (CN)
(74) Representative: Potter Clarkson
(86) International application number: PCT/CN2021/072417
(87) International publication number: WO 2021/179794

(57) **Abstract**

Provided is a prelithiation material, comprising a lithium-containing compound and an inorganic non-metallic reductive agent. Further provided is a method for preparing the prelithiation material of the present invention. Further provided is use of the prelithiation material of the present invention in a lithium ion battery. By mixing the prelithiation material provided by the present invention with a positive electrode material or coating the side of a separator near the positive electrode with the same, a battery is assembled, and during first cycle, active lithium can be released so as to compensate active lithium lost from a negative electrode. The prelithiation material provided by the present invention has a good compatibility with currently commercially available positive and negative electrodes, and is very suitable for current secondary lithium ion batteries.

## Description

### Technical Field

The present invention belongs to the technical field of energy storage. Specifically, the present invention relates to a prelithiation material and a preparation method and use thereof.

### Background Art

The irreversible capacity loss is caused by the formation of the solid electrolyte interface (SEI) at the negative electrode interface during the first cycle of lithium ion energy storage device, and the reduction of active lithium content will lead to a decrease in the energy density of the lithium ion energy storage device. Negative electrode materials in high specific energy storage devices often need to choose materials with higher specific capacities to increase energy density, such as alloy negative electrodes with high specific capacity. The alloy negative electrode needs to consume more active lithium than the graphite negative electrode during the first charge, which reduces the coulombic efficiency of the battery, resulting in a limited increase in the actual energy density. Therefore, the appropriate active prelithiation method has an important significance for the application of alloy negative electrodes and the improvement of the energy density of the lithium ion energy storage device.

Chinese Patent Publication No. CN1290209C discloses a method for compensating lithium in the negative electrode by adding lithium powder to compensate the loss of active lithium in a battery. However, this method requires a strict environmental control method in actual operations, otherwise it is easy to cause fire and explosion risk.

Chinese Patent Application No. CN201810282994 discloses a prelithiation material for a positive electrode, wherein a slurry prepared by using a Li₂S-based material is coated on the surface of the positive electrode to provide active lithium. However, such a method is still limited by the problem that the prelithiation material reacts with moisture in the environment.

Application No. CN201310070202.9 has developed a prelithiation method for a positive electrode using an inorganic lithium salt modified by a silane coupling agent as a prelithiation agent. The battery containing the prelithiation material prepared by the method needs to be baked in an oven at 80-110°C for 0.5-10 h after the first charging to realize the prelithiation performance. It is limited by the battery system and practical process compatibility.

Therefore, there is still a need in the industry to develop a lithium ion energy storage device with good air stability and practical ease of operation.

### Contents of the Invention

In order to compensate for the deficiencies of the prelithiation materials of the prior art, such as air stability and practical operability, the present invention provides a prelithiation material having air stability. The prelithiation material provided by the present invention is compatible with the preparation process of existing lithium ion energy storage devices, has low cost and is suitable for mass production. It can be widely used in industrial production.

The aforesaid object of the present invention is achieved by the following technical solutions:
In a first aspect, the present invention provides a prelithiation material comprising a lithium-containing compound and an inorganic non-metallic reductive agent.

Preferably, in the prelithiation material of the present invention, the prelithiation material further comprises a conductive agent.

Preferably, in the prelithiation material of the present invention, the conductive agent is coated on surfaces of the lithium-containing compound and the inorganic non-metallic reductive agent to form a conductive layer, or the conductive agent forms a uniform dispersion with the lithium-containing compound and the inorganic non-metallic reductive agent.

Preferably, in the prelithiation material of the present invention, the lithium-containing compound is one or more of lithium peroxide, lithium oxide, lithium carbonate, lithium metasilicate, lithium orthosilicate, and lithium phosphate; preferably, the lithium-containing compound is lithium phosphate and/or lithium orthosilicate.

Preferably, in the prelithiation material of the present invention, the inorganic non-metallic reductive agent is a substance capable of reducing a lithium-containing compound.

Preferably, in the prelithiation material of the present invention, the inorganic non-metallic reductive agent is one or more of elemental phosphorus, iron phosphide, boron phosphide, nickel phosphide, lithium phosphide, zinc phosphide, elemental boron, cobalt boride, molybdenum boride, calcium boride, magnesium boride, lanthanum boride, aluminum boride, tungsten boride, titanium boride, zirconium boride, chromium boride, elemental sulfur, titanium sulfide, zinc sulfide, lithium sulfide, iron sulfide, molybdenum sulfide, tungsten sulfide, cobalt sulfide, molybdenum nitride, niobium nitride, molybdenum carbide, indium iodide, lithium iodide, and nickel selenide; more preferably, the inorganic non-metallic reductive agent is one or more of boron phosphide, zinc phosphide, elemental boron, cobalt boride, molybdenum boride, lanthanum boride, calcium boride, aluminum boride, elemental sulfur, lithium sulfide, and titanium sulfide; further preferably, the inorganic non-metallic reductive agent is one or more of boron phosphide, elemental boron, lanthanum boride, calcium boride, lithium sulfide, elemental sulfur and titanium sulfide.

Preferably, in the prelithiation material of the present invention, the lithium-containing compound has a particle size of 10 nm-20 µm; more preferably, the lithium-containing compound has a particle size of 20 nm-200 nm.

Preferably, in the prelithiation material of the present invention, the inorganic non-metallic reductive agent has a particle size of from 10 nm-20 µm; more preferably, the inorganic non-metallic reductive agent has a particle size of 20 nm-200 nm.

Preferably, in the prelithiation material of the present invention, the conductive agent is a material capable of transporting electrons.

Preferably, in the prelithiation material of the present invention, the conductive agent is an organic conductive polymer, a conductive carbon, or an inorganic conductive compound.

Preferably, in the prelithiation material of the present invention, the organic conductive polymer is polyaniline, polypyrrole, or polythiophene; the inorganic conductive compound is titanium nitride or indium tin oxide; the conductive carbon is graphene, carbon nanotubes, acetylene black, or Ketjen black.

Preferably, in the prelithiation material of the present invention, the mass fraction of the lithium-containing compound is 50-90%, more preferably 60-80%; the mass fraction of the inorganic non-metallic reductive agent is 10-40%, more preferably 15-25%; the mass fraction of the conductive agent is 0.05-20%, more preferably 2-10%, based on the total mass of the prelithiation material, when the conductive agent is coated on surfaces of the lithium-containing compound and the inorganic non-metallic reductive agent to form the conductive layer.

Preferably, in the prelithiation material of the present invention, the conductive layer has a thickness of 2 nm-200 nm; more preferably, the conductive layer has a thickness of 2-50 nm, when the conductive agent is coated on surfaces of the lithium-containing compound and the inorganic non-metallic reductive agent to form the conductive layer.

Preferably, in the prelithiation material of the present invention, the mass fraction of the conductive agent is 5-50%, preferably 10-30%, further preferably 15-20%, based on the total mass of the prelithiation material, when the conductive agent forms a homogeneous dispersion with the lithium-containing compound and the inorganic non-metallic reductive agent.

In a second aspect, the present invention provides a method for preparing the prelithiation material of the present invention, comprising the steps of:
uniformly mixing a lithium-containing compound, an inorganic non-metallic reductive agent, and optionally a conductive agent to prepare the prelithiation material; or
uniformly mixing a lithium-containing compound and an inorganic non-metallic reductive agent, then introducing a conductive agent precursor and reacting the same on surfaces of the lithium-containing compound and the inorganic non-metallic reductive agent to form a conductive layer to prepare the prelithiation material.

Preferably, in the method of the present invention, the conductive agent precursor is a conductive polymer monomer, a saccharide, a pitch, a coke, an alkane gas, or an alkene gas.

Preferably, in the method of the present invention, the conductive agent precursor is aniline monomer, sucrose, glucose, paraffin oil, methane, acetylene, or ethylene.

In the method of the present invention, the method of coating a conductive agent on surfaces of a lithium-containing compound and an inorganic non-metallic reductive agent to form a conductive layer is not exclusive, and common methods known in the art may be used, for example, thermal cracking of carbon-containing compounds, chemical vapor deposition, ball-milled carbon coating, liquid-phase solvent thermal coating, in-situ chemical polymerization, and the like.

In the method of the present invention, the method of forming a uniform dispersion of the conductive agent with the lithium-containing compound and the inorganic non-metallic reductive agent is not exclusive, and a method commonly used in the art such as dry ball milling or wet ball milling may be used.

In a third aspect, the present invention also provides the use of the prelithiation material of the present invention or the prelithiation material prepared by the method of the present invention in a lithium ion battery.

Preferably, in the use of the present invention, the prelithiation material is used in the positive electrode of a lithium ion battery and/or in the positive electrode-facing surface of a separator of a lithium ion battery.

In a specific embodiment, the method of adding the prelithiation material of the present invention to the positive electrode of the lithium ion battery includes coating on the surface of a positive electrode current collector, adding to a positive electrode pole piece, coating on the surface of the positive electrode pole piece, or coating on the side of the separator close to the positive electrode.

Preferably, in the use of the present invention, the prelithiation material is 0.5-20%, more preferably 2-10%, based on the total mass of the positive electrode active material, and the positive electrode active material is composed of the prelithiation material and the positive electrode material.

In a fourth aspect, the present invention provides a prelithiation slurry comprising the prelithiation material of the present invention, further comprising a solvent, a binder, and optionally a conductive additive.

Preferably, in the prelithiation slurry of the present invention, the solvent is one or more of N-methyl pyrrolidone, water and absolute ethanol; the content of the solvent is 20-80% by weight of the prelithiation slurry, more preferably 60-75% by weight of the prelithiation slurry.

Preferably, in the prelithiation slurry of the present invention, the binder is one or more of polyvinylidene fluoride, sodium carboxymethyl cellulose and styrene-butadiene rubber; the content of the binder is 0.5-5% by weight of the prelithiation slurry, more preferably 2-5% by weight of the prelithiation slurry.

Preferably, in the prelithiation slurry of the present invention, the conductive additive is one or more of conductive graphite, acetylene black, carbon nanotube, nano powder and graphene; the content of the conductive additive is 0-10% by weight of the prelithiation slurry, more preferably 2-5% by weight of the prelithiation slurry.

In a fifth aspect, the present invention provides a lithium ion energy storage device comprising a prelithiation material of the present invention and a prelithiation slurry of the present invention on the surface of a positive electrode and/or a separator facing the positive electrode.

The present invention provides a method for preparing a composite prelithiation material based on a method of blending a lithium-containing compound with an inorganic reductive agent, and coating carbon at the interface, and the use of the composite prelithiation material as a positive electrode prelithiation agent in a lithium ion energy storage device. In the present invention, the lithium-containing compound is blended with an inorganic non-metallic reductive agent, and on this basis, effective electronic conductivity and air stability are achieved through interfacial carbon coating, so that the composite positive electrode prelithiation material is jointly constructed.

The present invention has the following advantageous effects:
The prelithiation material provided by the present invention is compatible with lithium ion battery manufacturing processes. By mixing the prelithiation material provided by the present invention with a positive electrode material or coating the side of separator near the positive electrode with the same, a battery is assembled, and during battery charge and discharge cycles, active lithium can be released so as to compensate active lithium lost from a negative electrode. The prelithiation material provided by the present invention has good compatibility with currently commercially available positive and negative electrodes, and is very suitable for current secondary lithium ion batteries without the need to adjust the redesign of electrolyte and battery manufacturing processes. In addition, the prelithiation material provided by the present invention has good air stability.

### Brief Description of the Drawings

Hereinafter, embodiments of the present invention will be described in detail with reference to the accompanying drawings, wherein:

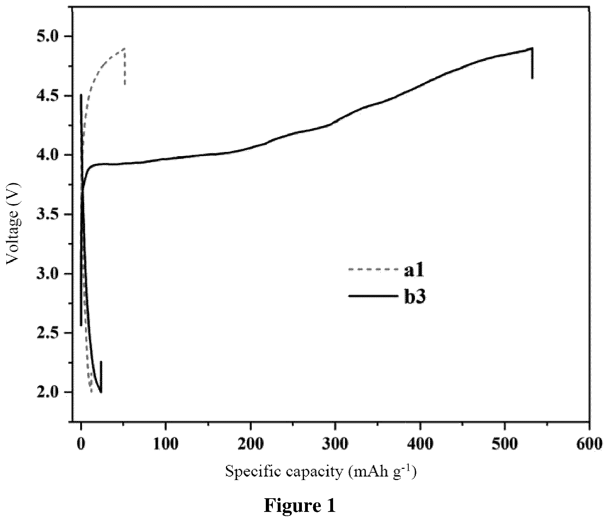

Fig. 1 is a first-cycle charge-discharge curve graph of a prelithiation material according to an example of the present invention; wherein a1 is the first-cycle charge-discharge curve of the pole piece numbered a1, and b3 is the first-cycle charge-discharge curve of the pole piece numbered b3;

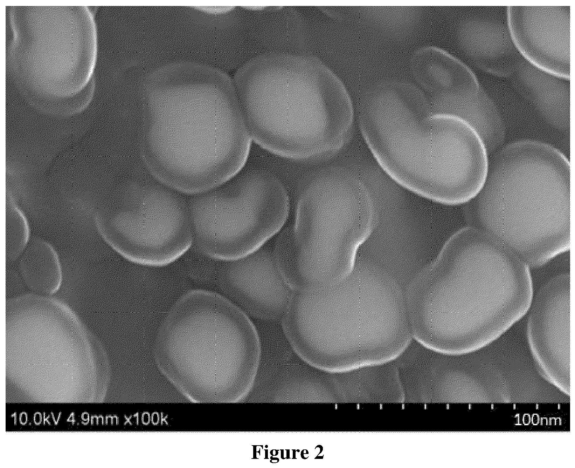

Fig. 2 is an electron microscope image of a "core-shell structure" of a prelithiation material when a b3 pole piece is prepared according to an example of the present invention;

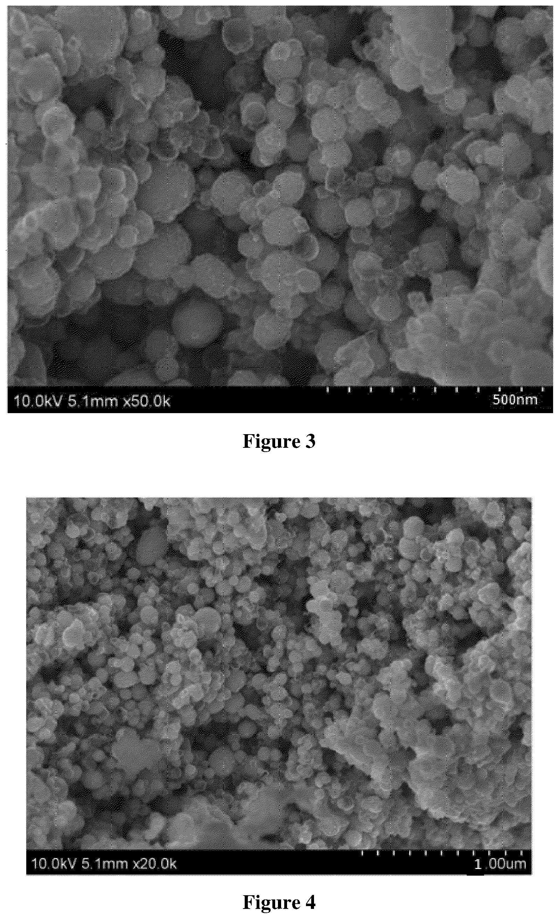

Fig. 3 is an electron microscope image of the "three-component homogeneous blend" of the prelithiation material of Example 10;
Fig. 4 is an electron microscope image of "two-component homogeneous blend" of the prelithiation material of Example 9;

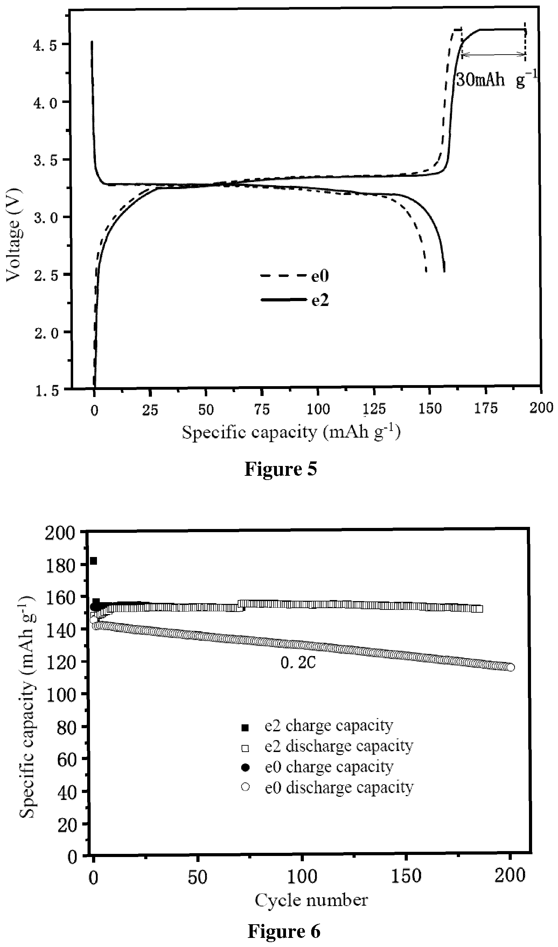

Fig. 5 is a graph comparing the first-cycle charge-discharge curves of a lithium iron phosphate-graphite full battery (e0) without prelithiation material and lithium iron phosphate + 5% prelithiation material-graphite full battery (e2) of Example 4; Fig. 5 shows that the first-cycle charge-discharge capacity of e2 is increased by 30 mAh/g compared with that of e0; and
Fig. 6 is a graph comparing the cyclic charge-discharge curves of the lithium iron phosphate-graphite full battery (e0) without prelithiation material and lithium iron phosphate + 5% prelithiation material-graphite full battery (e2) of Example 4; Fig. 6 shows that both the cycle stability and capacity retention of e2 are improved compared with that of e0.

### Best Modes for Carrying Out the Invention

The present invention is described in further detail below in connection with specific embodiments, which are given for the purpose of illustration only and are not intended to limit the scope of the present invention.

### Example 1

In this example, Li₄SiO₄ and Li₃PO₄ were used as a lithium-containing compounds; CaB₆ was used as a reductive agent; C₆H₁₂O₆ and C₁₂H₂₂O₁₁ were used as a conductive agent precursors; polyvinylidene fluoride (PVDF) was used as a binder; 1-methyl-2-pyrrolidone (NMP) was used as a solvent to fabricate a positive electrode pole piece.
1. 2.5 g of NMP was weighed and added to a stirring tank. 0.1 g of PVDF was added to the NMP, and the resultant was stirred sufficiently until evenly dispersed. Then, 0.63 g of Li₄SiO₄ and 0.17 g of CaB₆ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b0.
2. 0.63 g of Li₄SiO₄, 0.17 g of CaB₆, and 0.01 g of C₆H₁₂O₆ were mixed and placed into a tube furnace. The mixture was fired at a high temperature of 700°C under argon gas for 6 h. The thickness of the coated carbon layer was controlled at 2 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b1.
3. 0.63 g of Li₄SiO₄, 0.17 g of CaB₆, and 0.01 g of C₁₂H₂₂O₁₁ were mixed and placed into a tube furnace. The mixture was fired at a high temperature of 700°C under argon gas for 6 h. The thickness of the coated carbon layer was controlled at 2 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b2.
4. 0.63 g of Li₄SiO₄, 0.17 g of CaB₆, and 0.1g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b3.
5. 0.63 g of Li₄SiO₄, 0.17 g of CaB₆, and 0.095g of C₁₂H₂₂O₁₁ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b4.
6. 0.63 g of Li₄SiO₄, 0.17 g of CaB₆, and 0.2g of C₆H₁₂O₆ were mixed and placed into a tube furnace. The mixture was fired at a high temperature of 700°C under argon gas for 6 h. The thickness of the coated carbon layer was controlled at 50 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b5.
7. 0.63 g of Li₄SiO₄, 0.17 g of CaB₆, and 0.19g of C₁₂H₂₂O₁₁ were mixed and placed into a tube furnace. The mixture was fired at a high temperature of 700°C under argon gas for 6 h. The thickness of the coated carbon layer was controlled at 50 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b6.
8. 0.63 g of Li₃PO₄, 0.17 g of CaB₆, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as b7.

| Battery No. | Carbon Thickness (nm) Carbon Source | First-Cycle Charge Capacity (mAh/g) |
|---|---|---|
| b0 | 0 Null | 11 |
| b1 | 2 C₆H₁₂O₆ | 324 |
| b2 | 2 C₁₂H₂₂O₁₁ | 317 |
| b3 | 30 C₆H₁₂O₆ | 528 |
| b4 | 30 C₁₂H₂₂O₁₁ | 509 |
| b5 | 50 C₆H₁₂O₆ | 519 |
| b6 | 50 C₁₂H₂₂O₁₁ | 498 |
| b7 | 30 C₆H₁₂O₆ | 503 |

### Example 2

In this example, Li₄SiO₄ was used as a lithium-containing compound; CaB₆ was used as a reductive agent; C₆H₁₂O₆ was used as a conductive agent precursor; polyvinylidene fluoride (PVDF) was used as a binder; 1-methyl-2-pyrrolidone (NMP) was used as a solvent to fabricate a positive electrode pole piece.
1. 0.50 g of Li₄SiO₄, 0.3 g of CaB₆, and 0.1g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as c1.
2. 0.60 g of Li₄SiO₄, 0.2 g of CaB₆, and 0.1g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as c2.
3. 0.63 g of Li₄SiO₄, 0.17 g of CaB₆, and 0.1g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as c3.
4. 0.67 g of Li₄SiO₄, 0.13 g of CaB₆, and 0.1g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as c4.

| Battery No. | Lithium-containing compound: reductive agent | First-Cycle Charge Capacity (mAh/g) |
|---|---|---|
| c1 | 5:3 | 452 |
| c2 | 3:1 | 476 |
| c3 | 3.7:1 | 528 |
| c4 | 5.2:1 | 509 |

### Example 3

In this example, Li₄SiO₄ and Li₃PO₄ were used as a lithium-containing compounds; CaB₆ was used as a reductive agent; C₆H₁₂O₆ was used as a conductive agent precursor; polyvinylidene fluoride (PVDF) was used as a binder; 1-methyl-2-pyrrolidone (NMP) was used as a solvent; Super-P was used as a conductive additive to fabricate a positive electrode pole piece.
1. 0.63 g of Li₄SiO₄ and 0.17 g of CaB₆ were subjected to ball milling to control the particle size at 20 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as d1.
2. 0.63 g of Li₄SiO₄ and 0.17 g of CaB₆ were subjected to ball milling to control the particle size at 50 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as d2.
3. 0.63 g of Li₄SiO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as d3.
4. 0.63 g of Li₄SiO₄ and 0.17 g of CaB₆ were subjected to ball milling to control the particle size at 200 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as d4.
5. 0.63 g of Li₃PO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as d5.

| Battery No. | Particle Size (nm) | First-Cycle Charge Capacity (mAh/g) |
|---|---|---|
| d1 | 20 | 512 |
| d2 | 50 | 520 |
| d3 | 100 | 528 |
| d4 | 200 | 519 |
| d5 | 100 | 509 |

### Example 4

In this example, LiFePO₄ was used as a positive electrode material; Li₄SiO₄ was used as a lithium-containing compound; CaB₆ was used as a reductive agent; C₆H₁₂O₆ was used as a conductive agent precursor; polyvinylidene fluoride (PVDF) was used as a binder; 1-methyl-2-pyrrolidone (NMP) was used as a solvent; Super-P was used as a conductive additive to fabricate a positive electrode pole piece. 0.63 g of Li₄SiO₄ and 0.17 g of CaB₆ were subjected to ball milling after mixing to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material.
1. 2.5 g of NMP was weighed and added to a stirring tank. 0.1 g of PVDF was added to the NMP, and the resultant was stirred sufficiently until evenly dispersed. Then, 0.8 g of LiFePO₄ and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as e0.
2. 2.5 g of NMP was weighed and added to a stirring tank. 0.1 g of PVDF was added to the NMP, and the resultant was stirred sufficiently until evenly dispersed. Then, 0.784 g of LiFePO₄, 0.016 g of prelithiation material, and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as e1.
3. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material, and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as e2.
4. 2.5 g of NMP was weighed and added to a stirring tank. 0.1 g of PVDF was added to the NMP, and the resultant was stirred sufficiently until evenly dispersed. Then, 0.72g of LiFePO₄, 0.08 g of prelithiation material, and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as e3.

| Battery No. | Ratio (%) of prelithiation material to positive electrode active material | First-Cycle Charge Capacity (mAh/g) |
|---|---|---|
| e0 | 0 | 152 |
| e1 | 2 | 159 |
| e2 | 5 | 182 |
| e3 | 10 | 191 |

### Example 5

In this example, Li₄SiO₄ and Li₃PO₄ were used as a lithium-containing compounds; CaB₆ was used as a reductive agent; C₆H₁₂O₆ was used as a conductive agent precursor; polyvinylidene fluoride (PVDF) was used as a binder; 1-methyl-2-pyrrolidone (NMP) was used as a solvent to fabricate a positive electrode pole piece.
1. 1.04 g of Li₄SiO₄ and 0.28 g of CaB₆ were subjected to ball milling to control the particle size at 100 nm, mixed with 0.166 g of C₆H₁₂O₆, and then placed in a tube furnace and fired at a high temperature of 700°C under argon gas for 6 h. The thickness of the coated carbon layer was controlled at 30 nm to obtain a prelithiation material. 2.1 g of NMP was weighed and added to a stirring tank. 0.07 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as f0.
2. 0.63 g of Li₄SiO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as f1.
3. 0.4g of Li₄SiO₄ and 0.11 g of CaB₆ were subjected to ball milling to control the particle size at 100 nm, mixed with 0.065g of C₆H₁₂O₆, and then placed in a tube furnace and fired at a high temperature of 700°C under argon gas for 6 h. The thickness of the coated carbon layer was controlled at 30 nm to obtain a prelithiation material. 2.65 g of NMP was weighed and added to a stirring tank. 0.175g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as f2.
4. 0.63 g of Li₃PO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as f3.

| Battery No. | Prelithiation material (%) | Binder (%) | Solvent (%) | First-Cycle Charge Capacity (mAh/g) |
|---|---|---|---|---|
| f0 | 38 | 2 | 60 | 410 |
| f1 | 25 | 4 | 71 | 528 |
| f2 | 16 | 7 | 77 | 482 |
| f3 | 25 | 4 | 71 | 509 |

### Example 6

In this example, Li₄SiO₄ and Li₃PO₄ were used as a lithium-containing compounds; CaB₆, MoB₂, Li₂S, BP, and B were used as a reductive agent; C₆H₁₂O₆ was used as a conductive agent precursor; polyvinylidene fluoride (PVDF) was used as a binder; 1-methyl-2-pyrrolidone (NMP) was used as a solvent to fabricate a positive electrode pole piece.
1. 0.53 g of Li₄SiO₄, 0.1 g of Li₃PO₄, 0.1 g of CaB₆, 0.07 g of MoB₂, and 0.1 g of C₆H₆O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as I1.
2. 0.42 g of Li₄SiO₄, 0.38 g of MoB₂, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 12.
3. 0.52g of Li₄SiO₄, 0.28 g of Li₂S, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 13.
4. 0.59 g of Li₄SiO₄, 0.21 g of BP, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 14.
5. 0.7 g of Li₄SiO₄, 0.1 g of B, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 15.
6. 0.7 g of Li₄SiO₄, 0.1 g of S, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 16.
7. 0.7 g of Li₄SiO₄, 0.1 g of NbN, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 17.
8. 0.7 g of Li₄SiO₄, 0.1 g of LiI, and 0.1 g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as 18.

| Battery No. | Type of reductive agent | First-Cycle Charge Capacity (mAh/g) |
|---|---|---|
| I1 | CaB₆+MoB₂ | 517 |
| I2 | MoB₂ | 509 |
| I3 | Li₂S | 511 |
| I4 | BP | 498 |
| 15 | B | 518 |
| I6 | S | 521 |
| I7 | NbN | 501 |
| I8 | LiI | 512 |

### Example 7

In this example, Li₄SiO₄ and Li₃PO₄ were used as a lithium-containing compounds; CaB₆ was used as a reductive agent; C₆H₁₂O₆ was used as a conductive agent precursor; polyvinylidene fluoride (PVDF), sodium carboxymethyl cellulose (CMC), and styrene-butadiene copolymer (SBR) with a solids content of 25% by weight were used as a binder; and 1-methyl-2-pyrrolidone (NMP) and high purity deionized water were used as a solvent to fabricate a positive electrode pole piece.
1. 0.63 g of Li₄SiO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of high purity deionized water was weighed and added to a stirring tank. 0.015 g of CMC was added to the high purity deionized water, and the resultant was stirred sufficiently until evenly dispersed. Then, the prelithiation material and 0.075 g of SBR were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as g1.
2. 0.63 g of Li₄SiO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as g2.
3. 0.63 g of Li₃PO₄ and 0.17 g of CaB₆ were subjected to ball milling to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as g3.

| Battery No. | Solvent Type | Binder Type | First-Cycle Charge Capacity (mAh/g) |
|---|---|---|---|
| g1 | water | CMC+SBR | 417 |
| g2 | NMP | PVDF | 528 |
| g3 | NMP | PVDF | 509 |

### Example 8

In this example, LiFePO₄ was used as a positive electrode material; Li₄SiO₄ was used as a lithium-containing compound; CaB₆ was used as a reductive agent; polyvinylidene fluoride (PVDF) was used as a binder; 1-methyl-2-pyrrolidone (NMP) was used as a solvent; Super-P, DK, and KB were used as a conductive additive to fabricate a positive electrode pole piece. 0.63 g of Li₄SiO₄ and 0.17 g of CaB₆ were subjected to ball milling after mixing to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material.
1. 2.5 g of NMP was weighed and added to a stirring tank. 0.1 g of PVDF was added to the NMP, and the resultant was stirred sufficiently until evenly dispersed. Then, 0.76 g of LiFePO₄, 0.04 g of prelithiation material, and 0.4 g of g DK were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as h1.
2. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material, and 0.4 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as h2.
3. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material, and 0.4 g of KB were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as h3.

| Battery No. | Conductive Carbon Type | First-Cycle Charge Capacity (mAh/g) |
|---|---|---|
| h1 | DK | 169 |
| h2 | Super-P | 175 |
| h3 | KB | 170 |

### Example 9

In this example, LiFePO₄ was used as a positive electrode material; Li₄SiO₄ and Li₃PO₄ were used as a lithium-containing compound; CaB₆ was used as a reductive agent; polyvinylidene fluoride (PVDF) was used as a binder; 1-methyl-2-pyrrolidone (NMP) was used as a solvent; Super-P was used as a conductive additive to fabricate a positive electrode pole piece. 0.63 g of Li₄SiO₄ and 0.17 g of CaB₆ were mixed and subjected to ball milling to control the particle size at 100 nm, as the prelithiation material A. 0.63 g of Li₃PO₄ and 0.17 g of CaB₆ were mixed and subjected to ball milling to control the particle size at 100 nm, as the prelithiation material B.
1. 2.5 g of NMP was weighed and added to a stirring tank. 0.1 g of PVDF was added to the NMP, and the resultant was stirred sufficiently until evenly dispersed. Then, 0.76 g of LiFePO₄, 0.04 g of prelithiation material A, and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as J1.
2. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material B, and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as J2.
3. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material A, and 0.4 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as J3.
4. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material B, and 0.4 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as J4.

| Battery No. | Conductive Additive Content (g) | First-Cycle Charge Capacity (mAh/g) |
|---|---|---|
| J1 | 0.1 | 158 |
| J2 | 0.1 | 156 |
| J3 | 0.4 | 175 |
| J4 | 0.4 | 169 |

### Example 10

In this example, Li₄SiO₄ and Li₃PO₄ were used as a lithium-containing compounds; CaB₆ was used as a reductive agent; polyaniline, polypyrrole, titanium nitride, indium tin oxide, graphene, carbon nanotubes, and acetylene black were used as a conductive agent; polyvinylidene fluoride (PVDF) was used as a binder; 1-methyl-2-pyrrolidone (NMP) was used as a solvent to fabricate a positive electrode pole piece.
1. 0.63 g of Li₄SiO₄, 0.17 g of CaB₆, and 0.08 g of polyaniline were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K1.
2. 0.63 g of Li₄SiO₄, 0.17 g of CaB₆, and 0.01g of PPY were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K2.
3. 0.63 g of Li₄SiO₄, 0.17 g of CaB₆, and 0.49g of titanium nitride were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K3.
4. 0.63 g of Li₄SiO₄, 0.17 g of CaB₆, and 0.12g of indium tin oxid (ITO) were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K4.
5. 0.63 g of Li₄SiO₄, 0.17 g of CaB₆, and 0.227g of graphene were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K5.
6. 0.63 g of Li₄SiO₄, 0.17 g of CaB₆, and 0.21g of carbon nano tube (CNT) were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K6.
7. 0.63 g of Li₄SiO₄, 0.17 g of CaB₆, and 0.02g of acetylene black were subjected to ball milling to control the particle size at 100 nm and mixed evenly. 2.5 g of NMP was weighed and added to a stirring tank. 0.1 g of PVDF was added to the NMP, and the resultant was stirred sufficiently until evenly dispersed. Then, the ball-milled prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as K7.

| Battery No. | Conductive agent | First-Cycle Charge Capacity (mAh/g) |
|---|---|---|
| K1 | Organic conductive polymer: polyaniline | 509 |
| K2 | Organic conductive polymer: polypyrrole | 525 |
| K3 | Inorganic conductive compound: titanium nitride | 503 |
| K4 | Inorganic conductive compound: indium tin oxide | 498 |
| K5 | Conductive carbon: graphene | 489 |
| K6 | Conductive carbon: carbon nanotube | 499 |
| K7 | Conductive carbon: acetylene black | 512 |

### Example 11

In this example, Li₄SiO₄ was used as a lithium-containing compound; CaB₆ was used as a reductive agent; C₆H₁₂O₆, C₂H₂, and petroleum asphalt were used as a conductive agent precursors; ethanol and ethylene glycol were used as hydrothermal solvents; polyvinylidene fluoride (PVDF) was used as a binder; 1-methyl-2-pyrrolidone (NMP) was used as a solvent to fabricate a positive electrode pole piece.
1. 0.63 g of Li₄SiO₄, 0.17 g of CaB₆, and 0.1g of C₆H₁₂O₆ were mixed and placed into a tube furnace. The mixture was fired at a high temperature of 700°C under argon gas for 6 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as L1.
2. 0.2 g of petroleum asphalt was taken, and added to 20 ml of kerosene to be dissolved. The obtained solution was filtered multiple times. 0.63 g of Li₄SiO₄, and 0.17 g of CaB₆ were added and stirred uniformly. The solvent remaining in the mixture was evaporated. The mixture was placed in a tube furnace and subjected to a high-temperature carbonization treatment at 600°C for 4 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as L2.
3. 0.63 g of Li₄SiO₄ and 0.17 g of CaB₆ were mixed and placed in a tube furnace. The mixture was fired at a high temperature of 450°C under nitrogen gas for 2 h. The residual oxygen in the tube was removed. Then, the temperature was raised to 800°C. The mixture was fired at 800°C under C₂H₂ for 1 h. The thickness of the coated carbon layer was controlled at 30 nm to obtain a prelithiation material. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as L3.
4. 0.1 g of C₆H₁₂O₆ was added to a mixed solution of 30ml of ethanol and 20ml of ethylene glycol. 0.63 g of Li₄SiO₄ and 0.17 g of CaB₆ were added to the above solution and stirred fully to mix evenly. The obtained solution was placed into a hydrothermal kettle and heated at 200°C for 12 h. The thickness of the coated carbon layer was controlled at 30nm. A prelithiation material was obtained by suction filtration and washing. 2.5 g of NMP was weighed and added to a stirring tank. 0.1 g of PVDF was added to the NMP, and the resultant was stirred sufficiently until evenly dispersed. Then, the prelithiation material was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as L4.

| Battery No. | Carbon Coating Process | First-Cycle Charge Capacity (mAh/g) |
|---|---|---|
| L1 | High-temperature decomposition C₆H₁₂O₆ coating | 528 |
| L2 | Asphalt carbonization coating | 519 |
| L3 | Gas phase C₂H₂ coating | 521 |
| L4 | Liquid-phase hydrothermal coating | 523 |

### Example 12

In this example, LiFePO₄ was used as a positive electrode material; Li₄SiO₄ was used as a lithium-containing compound; CaB₆ was used as a reductive agent; C₆H₁₂O₆ was used as a conductive agent precursor; polyvinylidene fluoride (PVDF) was used as a binder; 1-methyl-2-pyrrolidone (NMP) was used as a solvent; Super-P was used as a conductive additive of positive electrode to fabricate a positive electrode pole piece. 0.63 g of Li₄SiO₄ and 0.17 g of CaB₆ were subjected to ball milling after mixing to control the particle size at 100 nm, mixed with 0.1 g of C₆H₁₂O₆, and then placed in a tube furnace and fired at a high temperature of 700°C under argon gas for 6 h. The thickness of the coated carbon layer was controlled at 30 nm to obtain a prelithiation material.
1. 2.5 g of NMP was weighed and added to a stirring tank. 0.1 g of PVDF was added to the NMP, and the resultant was stirred sufficiently until evenly dispersed. Then, 0.76g of LiFePO₄, 0.04 g of prelithiation material, and 0.1 g of Super-P were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as M1.
2. 2.5 g of NMP was weighed and added to a stirring tank. 0.1 g of PVDF was added to the NMP, and the resultant was stirred sufficiently until evenly dispersed. Then, 0.8 g of the prelithiation material and 0.1 g of Super-P were added to the stirring tank, and the resultant was stirred again until evenly dispersed. A pre-prepared lithium iron phosphate pole piece was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as M2.
3. 2.5 g of NMP was weighed and added to a stirring tank. 0.1 g of PVDF was added to the NMP, and the resultant was stirred sufficiently until evenly dispersed. Then, 0.8 g of the prelithiation material and 0.1 g of Super-P were added to the stirring tank, and the resultant was stirred again until evenly dispersed. A pre-prepared separator was evenly coated with the obtained slurry on the surface, and placed in a 55°C oven to be dried for 6 h. The dried separator was punched to a suitable size. The side coated with the slurry was facing the active material side of the positive electrode pole piece to assemble a battery, which was recorded as M3.

| Battery No. | Use Method of Prelithiation Agent | First-Cycle Charge Capacity (mAh/g) |
|---|---|---|
| M1 | Pre-mixed with the positive electrode material | 182 |
| M2 | Coated on the surface of positive electrode material | 179 |
| M3 | Coated on the surface of the separator near the positive electrode side | 181 |

### Comparative Example 1

In this example, Li₃PO₄ and Li₄SiO₄ were used as a lithium-containing compounds; CaB₆, Co₃B₂, and MoB₂ were used as a reductive agents; PVDF was used as a binder; NMP was used as a solvent to fabricate a positive electrode pole piece.
1. 2.5 g of NMP was weighed and added to a stirring tank. 0.1 g of PVDF was added to the NMP, and the resultant was stirred sufficiently until evenly dispersed. Then, 0.8g of Li₃PO₄ was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a0.
2. 2.5 g of NMP was weighed and added to a stirring tank. 0.1 g of PVDF was added to the NMP, and the resultant was stirred sufficiently until evenly dispersed. Then, 0.8 g of Li₄SiO₄ was added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a1.
3. 2.5 g of NMP was weighed and added to a stirring tank. 0.1 g of PVDF was added to the NMP, and the resultant was stirred sufficiently until evenly dispersed. Then, 0.63 g of Li₃PO₄ and 0.17 g of CaB₆ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a2.
4. 2.5 g of NMP was weighed and added to a stirring tank. 0.1 g of PVDF was added to the NMP, and the resultant was stirred sufficiently until evenly dispersed. Then, 0.63 g of Li₄SiO₄ and 0.17 g of CaB₆ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a3.
5. 2.5 g of NMP was weighed and added to a stirring tank. 0.1 g of PVDF was added to the NMP, and the resultant was stirred sufficiently until evenly dispersed. Then, 0.42 g of Li₃PO₄ and 0.38 g of MoB₂ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a4.
6. 2.5 g of NMP was weighed and added to a stirring tank. 0.1 g of PVDF was added to the NMP, and the resultant was stirred sufficiently until evenly dispersed. Then, 0.42 g of Li₄SiO₄ and 0.38 g of MoB₂ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a5.
7. 2.5 g of NMP was weighed and added to a stirring tank. 0.1 g of PVDF was added to the NMP, and the resultant was stirred sufficiently until evenly dispersed. Then, 0.4 g of Li₃PO₄ and 0.4 g of Co₃B₂ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a6.
8. 2.5 g of NMP was weighed and added to a stirring tank. 0.1 g of PVDF was added to the NMP, and the resultant was stirred sufficiently until evenly dispersed. Then, 0.4 g of Li₄SiO₄ and 0.4 g of Co₃B₂ were added to the stirring tank, and the resultant was stirred again until evenly dispersed. An aluminum foil was evenly coated with the obtained slurry on the surface, and placed in a 55°C oven to be dried for 6 h. The dried pole piece was punched into a disc with a diameter of 12 mm and transferred into a vacuum oven at 120°C for 6 h. After the temperature dropped to room temperature, the pole piece was quickly transferred into a glove box filled with argon gas for storage. The resulting pole piece was recorded as a7.

| Battery No. | First-Cycle Charge Capacity (mAh/g) |
|---|---|
| a0 | 2 |
| al | 3 |
| a2 | 11 |
| a3 | 12 |
| a4 | 5 |
| a5 | 7 |
| a6 | 5 |
| a7 | 6 |

## Claims

1. A prelithiation material, comprising a lithium-containing compound and an inorganic non-metallic reductive agent.

2. The prelithiation material according to claim 1, wherein the prelithiation material further comprises a conductive agent.

3. The prelithiation material according to claim 2, wherein the conductive agent is coated on surfaces of the lithium-containing compound and the inorganic non-metallic reductive agent to form a conductive layer, or the conductive agent forms a uniform dispersion with the lithium-containing compound and the inorganic non-metallic reductive agent.

4. The prelithiation material according to claim 1, wherein the lithium-containing compound is one or more of lithium peroxide, lithium oxide, lithium carbonate, lithium metasilicate, lithium orthosilicate, and lithium phosphate; preferably, the lithium-containing compound is lithium phosphate and/or lithium orthosilicate;
preferably, the inorganic non-metallic reductive agent is a substance capable of reducing a lithium-containing compound;
preferably, the inorganic non-metallic reductive agent is one or more of elemental phosphorus, iron phosphide, boron phosphide, nickel phosphide, lithium phosphide, zinc phosphide, elemental boron, cobalt boride, molybdenum boride, calcium boride, magnesium boride, lanthanum boride, aluminum boride, tungsten boride, titanium boride, zirconium boride, chromium boride, elemental sulfur, titanium sulfide, zinc sulfide, lithium sulfide, iron sulfide, molybdenum sulfide, tungsten sulfide, cobalt sulfide, molybdenum nitride, niobium nitride, molybdenum carbide, indium iodide, lithium iodide, and nickel selenide; more preferably, the inorganic non-metallic reductive agent is one or more of boron phosphide, zinc phosphide, elemental boron, cobalt boride, molybdenum boride, lanthanum boride, calcium boride, aluminum boride, elemental sulfur, lithium sulfide, and titanium sulfide; further preferably, the inorganic non-metallic reductive agent is one or more of boron phosphide, elemental boron, lanthanum boride, calcium boride, lithium sulfide, elemental sulfur and titanium sulfide;
preferably, the lithium-containing compound has a particle size of 10 nm-20 µm; more preferably, the lithium-containing compound has a particle size of 20 nm-200 nm;
preferably, the inorganic non-metallic reductive agent has a particle size of 10 nm-20 µm; more preferably, the inorganic non-metallic reductive agent has a particle size of 20 nm-200 nm.

5. The prelithiation material according to claim 2, wherein the conductive agent is a material capable of transporting electrons;
preferably, the conductive agent is an organic conductive polymer, a conductive carbon, or an inorganic conductive compound; and
preferably, the organic conductive polymer is polyaniline, polypyrrole, or polythiophene; the inorganic conductive compound is titanium nitride or indium tin oxide; and the conductive carbon is graphene, carbon nanotubes, acetylene black, or Ketjen black.

6. The prelithiation material according to claim 3, wherein the mass fraction of the lithium-containing compound is 50-90%, more preferably 60-80%; the mass fraction of the inorganic non-metallic reductive agent is 10-40%, more preferably 15-25%; the mass fraction of the conductive agent is 0.05-20%, more preferably 2-10%, based on the total mass of the prelithiation material, when the conductive agent is coated on surfaces of the lithium-containing compound and the inorganic non-metallic reductive agent to form a conductive layer; and
preferably, the conductive layer has a thickness of 2 nm-200 nm; more preferably, the conductive layer has a thickness of 2-50 nm, when the conductive agent is coated on surfaces of the lithium-containing compound and the inorganic non-metallic reductive agent to form a conductive layer.

7. The prelithiation material according to claim 3, wherein the mass fraction of the conductive agent is 5-50%, preferably 10-30%, further preferably 15-20%, based on the total mass of the prelithiation material, when the conductive agent forms a homogeneous dispersion with the lithium-containing compound and the inorganic non-metallic reductive agent.

8. A method for preparing a prelithiation material according to any one of claims 1-7, comprising the steps of:
uniformly mixing a lithium-containing compound, an inorganic non-metallic reductive agent, and optionally a conductive agent to prepare the prelithiation material; or
uniformly mixing a lithium-containing compound and an inorganic non-metallic reductive agent, then introducing a conductive agent precursor and reacting the same on surfaces of the lithium-containing compound and the inorganic non-metallic reductive agent to form a conductive layer to prepare the prelithiation material.

9. The method according to claim 8, wherein the conductive agent precursor is a conductive polymer monomer, a saccharide, a pitch, a coke, an alkane gas, or an alkene gas; and
preferably, the conductive agent precursor is aniline monomer, sucrose, glucose, paraffin oil, methane, acetylene, or ethylene.

10. Use of the prelithiation material according to any one of claims 1-7 or the prelithiation material obtained by the method according to any one of claims 8-9 in a lithium ion battery.
